# EUROPÄISCHE PATENTSCHRIFT

(11) **EP 0 887 622 B1**
(45) Veröffentlichungstag und Bekanntmachung des Hinweises auf die Patenterteilung: **26.02.2003**
(21) Anmeldenummer: 98440125.7
(22) Anmeldetag: 10.06.1998
(51) Int. Cl.: G01C 21/20, G08G 1/127

(54) **Verfahren zur Ermittlung von Streckendaten**
Method for determining path data
Procédé pour la détermination de données de trajets

(30) Priorität: 10.06.1997 DE 19724407
(43) Veröffentlichungstag der Anmeldung: 30.12.1998
(73) Patentinhaber: ALCATEL, 75088 Paris (FR)
(72) Erfinder: Brocke, Karl, 71642 Ludwigsburg (DE); Harrer, Stefan, 73734 Esslingen (DE)
(74) Vertreter: Schätzle, Albin, Dipl.-Phys.

(56) Entgegenhaltungen:
- GB-A- 2 025 185
- GB-A- 2 281 141

## Beschreibung

Die Erfindung betrifft ein Verfahren zur Ermittlung von Streckendaten gemäß dem Oberbegriff des Anspruchs 1. Für den reibungslosen Betrieb des ÖPNV (Öffentlicher Personen-Nah-Verkehr) ist es erforderlich, genaue Streckendaten der zu befahrenden Linien zur Verfügung zu haben. Beispielsweise müssen die Aktivierungspunkte zur Auslösung von LSA-Telegrammen (Licht-Signal-Anlage) zur Vorrangumschaltung von Ampelanlagen (LSA) mit einer Toleranz von +/- 5 m reproduzierbar sein. Das heißt, die Funkansteuerung der Ampelanlagen - "grüne Welle" für Busse - funktioniert nur, wenn der interne Weggeber innerhalb eines Umkreises von +/- 5 m ein Auslösesignal für das LSA-Telegramm generiert. Die bekannten internen und externen Weggeber genügen diesen Anforderungen im allgemeinen nicht. Lediglich die Orientierung anhand von Funk-Baken, deren Standort bekannt ist, könnte durch Abstandsermittlung eine hinreichend genaue Ausmessung einer Fahrtstrecke ermöglichen. Dazu wäre allerdings eine hohe Dichte von Funk-Baken erforderlich, deren Installation und Wartung kostspielig und aufwendig ist.

Üblicherweise wird deshalb eine geodätische Vermessung, insbesondere der Aktivierungspunkte und der Haltestellen, vorgenommen. Auch diese Methode ist sehr kostenaufwendig und mit ganz erheblichem manuellem Aufwand für die Datenermittlung und -eingabe in die internen Weggeber der einzelnen Fahrzeuge verbunden. Nachteilig ist darüberhinaus, daß jegliche Änderung des Streckennetzes, inklusive geplanter Umleitungen, einen erheblichen Aufwand zur Neuvermessung und Dateneingabe der Änderungen verursacht.

Der Erfindung liegt die Aufgabe zugrunde, ein gattungsgemäßes Verfahren anzugeben, welches eine genauere Ermittlung der Streckendaten gestattet.

Diese Aufgabe wird durch die kennzeichnenden Merkmale des Anspruchs 1 gelöst. Durch den wiederholten Vergleich der intern und extern ermittelten Koordinaten lassen sich systematische Abweichungen feststellen, wodurch ein Abgleich des internen Weggebers möglich ist. Nach einer ausreichenden Anzahl von Messungen, die unter Berücksichtigung qualitativer Randbedingungen und Plausibilitätskontrollen zur Vermeidung von Fehlinterpretationen durchgeführt werden können, werden die statistisch ausgewerteten, quasi korrigierten Daten den internen Weggebern als Streckendaten zur Verfügung gestellt.

Streckenänderungen lassen sich auf diese Art und Weise kontinuierlich in den Fahrbetrieb integrieren. Dazu erfolgt anfangs ein Statistikbetrieb, bei dem die Daten der geänderten Teilstrecke ermittelt und statistisch ausgewertet werden, ohne daß eine Unterbrechung oder eine manuelle Ausmessung der neuen Teilstrecke erforderlich wäre. Nach Beendigung des Statistikbetriebes und dem Abgleich repektive der Eichung des internen Weggebers sind auch auf der neuen Teilstrecke alle Aktiviertungspunkte mit ausreichender Genauigkeit durch den internen Weggeber reproduzierbar.

Gemäß Anspruch 2 wird das Verfahren vorzugsweise für den ÖPNV mittels DGPS (Differential Global Positioning System) und RBL (rechnergestütztes Betriebleitsystem) verwendet. Denkbar ist jedoch auch die Anwendung im Güterverkehr, im privaten Bereich, auf Überlandstrecken und bei allen Arten von Fahrzeugen.

Durch die Datenübertragung gemäß Anspruch 3 ergibt sich eine weitgehende Automatisierung des Einmeßvorganges, verbunden mit einem nahtlosen Übergang zwischen dem Statistikbetrieb und dem Normalbetrieb.

Insbesondere zur Bewirkung einer Vorrangumschaltung von Ampelanlagen gemäß Anspruch 4 bzw. 5 sind präzise Streckendaten erforderlich. Dabei muß gewährleistet sein, daß das RBL-Bordgerät ein LSA-Telegramm (Lichtsignal-Anlage) am optimalen Aktivierungspunkt +/- 5 m automatisch generiert. Um diese Genauigkeit zu erreichen, müssen die vermessenen Streckendaten der Haltestellen mit einem maximalen Fehler von +/- 1 m bereitgestellt werden. Die Statistikauswertung kann diese Forderung realisieren, wenn bei Einzelmessung die Koordinaten der Haltestellen mit einer Genauigkeit von ca. +/- 5 m und die Streckenlängen zwischen den Haltestellen mit einer Genauigkeit von ca. +/- 5 % ermittelbar sind.

Die Erfindung wird nachfolgend anhand figürlich dargestellter Ausführungsbeispiele näher erläutert. Es zeigen:

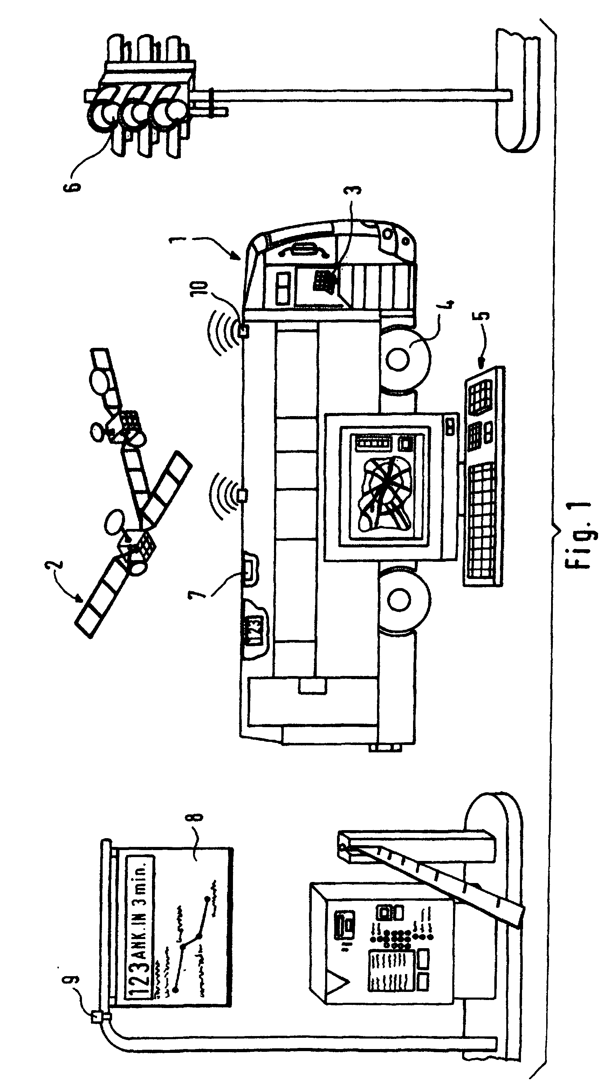

Figur 1 eine Übersicht der wichtigsten Systembestandteile,
Figur 2 eine schematische Darstellung der Meßpunkte und
Figur 3 schematisch einen Anwendungsfall.

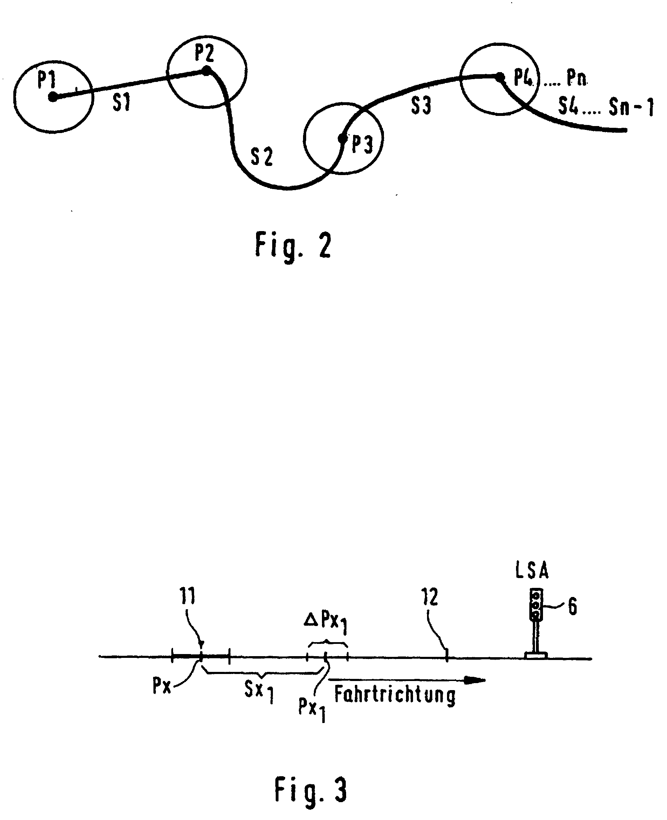

Zur Ermittlung genauerer Streckendaten eines Busses 1, der auf einer bestimmten Fahrtstrecke fahrplanmäßig verkehrt, werden Meßpunkte, insbesondere Haltepunkte P1, P2 ... Px ...Pn / Figuren 2 und 3 sowohl mittels eines DGPS (Differential Global Positioning System) 2 als auch mittels eines RBL- Bordrechners 3 (Rechnergestütztes Betriebs-Leitsystem) ermittelt. Letzteres kann z. B. mit einem Odometer zusammenwirken, welches die Raddrehungen als Maß für den zurückgelegten Weg erfaßt. Die DGPS- und RBL- Meßwerte werden miteinander verglichen und statistisch ausgewertet. Nach einer ausreichenden Anzahl von Messungen je Haltepunkt einer Fahrtstrecke lassen sich sowohl die genauen Koordinaten P1, P2 ... Px ... Pn der Haltepunkte als auch die Streckenlängen S1, S2 ... Sn-1 zwischen zwei Haltepunkten ermitteln. Die Anzahl der benötigten Messungen ist durch eine Zusammenfassung der Ergebnisse aller auf einer Fahrtstrecke verkehrender Busse 1 beschleunigt zu erreichen. Dazu ist eine tägliche Übertragung der Meßdaten aller beteiligten Busse 1 mittels Funk-LAN zur Offline-Auswertung in eine Zentrale 5 des RBL vorgesehen. Sobald die gesammelten Daten in der Offline-Auswertung ausreichende Stabilitätskriterien hinsichtlich der Varianz der Ergebnisse erfüllen, werden diese den einzelnen RBL-Bordrechnern 3 der Busse 1 per Daten- Down-Load wieder zur Verfügung gestellt. Der RBL-Bordrechner 3 ist nunmehr in der Lage, genau in dem Streckenabschnitt ΔPx₁ / Figur 3 ein Funktelegramm zu generieren, in welchem Abschnitt ΔPx₁ dieses Funktelegramm einen Empfänger einer LSA 6 (Licht-Signal-Anlage) erreichen kann. Das Funktelegramm bewirkt eine Vorrangumschaltung der LSA. Auf diese Weise ist für Busse 1, insbesondere des ÖPNV (Öffentlicher Personen-Nah-Verkehr) eine Bevorzugung nach Art einer "grünen Welle" erreichbar. Desweiteren können die dem RBL-Bordrechner 3 mit recht hoher Genauigkeit zur Verfügung stehenden Positionsdaten auch zur Steuerung einer optischen und/oder akustischen Haltestellensignalisierung 7 innerhalb des Busses 1 wie auch zur Ansteuerung einer Ankunftsanzeige 8 an den anzufahrenden Haltestellen 11/Figur 3 verwendet werden. Die Ankunftsanzeige 8 ist dazu mit einem Empfänger 9 ausgestattet, während der RBL-Bordrechner 3 mit einem entsprechenden Sender 10 verbunden ist. In Abhängigkeit von der momentanen Position des Busses 1 ergibt sich an den einzelnen Haltestellen 11/Figur 3 eine bestimmte Wartezeit. Diese prognostizierte Wartezeit kann z.B. als "Ankunft in XX Minuten" angezeigt werden.

Figur 2 veranschaulicht eine Fahrtstrecke, bestehend aus Abschnitten S1, S2 ... Sn-1 zwischen Haltepunkten P1, P2 ... Pn. Für die Haltepunkte P1, P2 ... Pn werden gemäß oben beschriebener Vergleichsmessungen und statistischer Auswertungen die genauen Koordinaten ermittelt. Aus diesen Koordinaten und odometrisch gemessenen Abständen ergeben sich auch die genauen Streckenlängen S1, S2 ... Sn-1.

Diese Daten dienen als Grundlage zur Ermittlung genauer Aktivierungspunkte, von denen in Figur 3 ein Auslösepunkt für ein LSA-Telegramm mit Px₁ bezeichnet ist. Dabei bezeichnen Px eine der n Haltestellen 11 und Sx₁ den Abstand von dieser Haltestelle 11 bis zu dem Auslösepunkt Px₁. Dieser Punkt Px₁ ist mit einer Toleranz von 1/2ΔPx₁ = ca. +/- 5 m ideal zur Auslösung des LSA-Telegromms zwecks Bewirkung der Vorrangumschaltung der Lichtsignalanlage 6 geeignet. Die LSA-interne Umschaltzeit kann derart programmiert sein, daß der Bus 1 bei normalem Verkehrsfluß nicht an einer Haltelinie 12 vor der Lichtsignalanlage 6 anhalten muß.

Die Erfindung beschränkt sich nicht auf das vorstehend angegebene Ausführungsbeispiel. Vielmehr ist eine Anzahl von Varianten denkbar, welche auch bei grundsätzlich anders gearteter Ausführung von der Erfindung Gebrauch machen.

## Patentansprüche

1. Verfahren zur Ermittlung von Streckendaten, insbesondere geographischen Koordinaten (P1, P2 ...Px, Px₁ ... Pn) und Streckenlängen (S1, S2 ... Sx₁ ... Sn-₁), für häufig zu befahrende Strecken, wobei Positionsdaten eines Fahrzeuges entlang der Strecke sowohl mittels eines externen Weggebers als auch mittels eines internen Weggebers gemessen werden,
**dadurch gekennzeichnet,**
**daß** die extern und intern gemessenen Positionsdaten mehrerer Fahrten und/oder Fahrzeuge für charakteristische Punkte der Strecke, insbesondere Haltepunkte (P1, P2 ... Px ... Pn), miteinander verglichen und statistisch ausgewertet werden und daß die ausgewerteten Daten dem internen Weggeber als Streckendaten zur Verfügung gestellt werden.

2. Verfahren nach Anspruch 1, **dadurch gekennzeichnet, daß** als externer Weggeber ein DGPS, d.h. Differential Global Positioning System, (2) und als interner Weggeber ein RBL-Bordrechner, d.h. Rechnergestütztes Betriebs-Leitsystem (3), verwendet wird, wobei Fahrzeuge des ÖPNV, d.h. Öffentlicher Personen-Nah-Verkeh, mit den RBL-Bordrechnern (3) ausgestattet sind.

3. Verfahren nach Anspruch 2, **dadurch gekennzeichnet, daß** die gemessenen Positionsdaten mittels Funk-LAN zur Offline-Auswertung in eine RBL-Zentrale (5) übertragen werden und daß die Streckendaten dem RBL-Bordrechner (3) mittels Daten-Down-Load zur Verfügung gestellt werden.

4. Verfahren nach Anspruch 2 oder 3, **dadurch gekennzeichnet, daß** Streckendaten definierter Aktivierungspunkte (Px₁), zum Beispiel Streckendaten für die Auslösung von LSA-Telegrammen, d.h. Licht-Signal-Anlage (6), zur Vorrangumschaltung von Ampelanlagen (LSA (6)), ermittelt werden.

5. Verfahren nach Anspruch 4, **dadurch gekennzeichnet, daß** die Aktivierungspunkte (Px₁) durch Ermittlung der geographischen Koordinaten (Px) der Haltestellen (11) und der Streckenlängen (Sx₁) zur jeweils nächst benachbarten Haltestelle (11) ermittelt werden.

## Claims

1. Method of determining path data, particularly geographical co-ordinates (P1, P2 ... Px, Px₁ ... Pn) and path lengths (S1, S2 ... Sx₁ ... Sn-1) for paths to be travelled frequently, position data of a vehicle along the path being measured using both an external displacement sensor and an internal displacement sensor,
**characterized in that**
the externally and internally measured position data of multiple journeys and/or vehicles for characteristic points of the path, particularly stopping points (P1, P2 ... Px ... Pn), is compared to each other and analysed statistically, and that the analysed data is made available to the internal displacement sensor as path data.

2. Method according to Claim 1, **characterized in that** a DGPS (Differential Global Positioning System) (2) is used as the external displacement sensor, and an RBL, ie., rechnergestütztes Betriebsleitsystem = computer-aided operations management system on-board computer (3) is used as the internal displacement sensor, local public passenger transport vehicles being equipped with the RBL on-board computers (3).

3. Method according to Claim 2, **characterized in that** the measured position data is transmitted by radio LAN to an RBL centre (5) for offline analysis, and that the path data is made available to the RBL on-board computer (3) by data download.

4. Method according to Claim 2 or 3, **characterized in that** path data of defined activation points (Px₁), e.g. path data to trigger LSA, ie., Licht-Signal-Anlage = light signal system (6) messages for priority switching of light signal systems (6), is determined.

5. Method according to Claim 4, **characterized in that** the activation points (Px₁) are determined by determining the geographical co-ordinates (Px) of the stops (11) and the path lengths (Sx₁) to the nearest adjacent stop (11).

## Revendications

1. Procédé pour déterminer des données de distance, particulièrement des coordonnées géographiques (P1, P2...Px, Px₁...Pn) et des longueurs de parcours (S1 S2...Sx₁...Sn-1) pour des parcours souvent utilisés, dans lequel des données de position d'un véhicule sont mesurées le long du parcours, aussi bien au moyen d'un capteur de déplacement externe qu'au moyen d'un capteur de déplacement interne, **caractérisé en ce que** les données de position internes et externes mesurées de plusieurs trajets et/ou véhicules sont comparées et analysées les unes par rapport aux autres pour des points caractéristiques du parcours, particulièrement les points d'arrêt (P1, P2...Px...Pn), et **en ce que** les données analysées sont mises à la disposition du capteur de déplacement interne comme données de parcours.

2. Procédé selon la revendication 1, **caractérisé en ce qu'**un PSMD, c'est-à-dire un positionnement par méthode spatiale différentielle (2), est utilisé comme capteur de déplacement externe et un ordinateur de bord RBL, c'est-à-dire un système de contrôle de fonctionnement assisté par ordinateur (3), est utilisé comme capteur de déplacement interne, dans lequel les véhicules de transport public à courte distance sont équipés d'ordinateurs de bord RBL (3).

3. Procédé selon la revendication 2, **caractérisé en ce que** les données de position mesurées sont transmises au moyen d'un réseau local radiotélégraphique pour analyse hors ligne dans un central RBL (5), et **en ce que** les données de parcours sont mises à la disposition de l'ordinateur de bord RBL (3) au moyen d'un télédéchargement de données.

4. Procédé selon la revendication 2 ou 3, **caractérisé en ce que** les données de parcours des points d'activation (Px₁) définis, par exemple, les données de parcours pour déclencher les télégrammes DSL, c'est-à-dire le dispositif de signal lumineux (6), sont déterminés pour une commutation prioritaire des dispositifs de feux de circulation (DSL (6)).

5. Procédé selon la revendication 4, **caractérisé en ce que** les points d'activation (Px₁₎ sont déterminés par le calcul des coordonnées géographiques (Px) des points d'arrêt (11) et des longueurs de parcours (Sx₁) pour chaque point d'arrêt (11) suivant voisin.
